# EUROPEAN PATENT APPLICATION

(11) **EP 2 711 110 A2**
(43) Date of publication of application: **26.03.2014**
(21) Application number: 13183806.2
(22) Date of filing: 10.09.2013
(51) Int. Cl.: B22F 3/105, B29C 67/00

(54) **Reduced build mass additive manufacturing chamber**

(30) Priority: 19.09.2012 US 201213622498
(71) Applicant: Aerojet Rocketdyne of DE, Inc., Sacramento, California 95813-6000 (US)
(72) Inventor: Minick, Alan B., Huntsville, AL 35806 (US)
(74) Representative: Leckey, David Herbert

(57) **Abstract**

A disclosed additive manufacturing machine (10) includes a work surface (16) for supporting fabrication of part (18) and a housing (50) defining a chamber (48) over the work surface (16). A material applicator (24) supported on the housing (50) deposits material (26) onto the work surface (16) and a blocker plate (40) disposed between the material applicator (24) and the work surface (16) for blocking a portion of material (26) deposited by the material applicator (24). An energy directing device (20) is supported on the housing (50) and directing energy (22) within the chamber (48) to form the part (18).

## Description

### BACKGROUND

This disclosure generally relates to an additive manufacturing machine and process. More particularly, this disclosure relates to a configuration compensating for increased size and weight of larger parts generated in an additive manufacturing process.

Typical manufacturing methods include various methods of removing material from a starting blank of material to form a desired completed part shape. Such methods utilize cutting tools to remove material to form holes, surfaces, overall shapes and more by subtracting material from the starting material. Such subtractive manufacturing methods impart physical limits on the final shape of a completed part. Additive manufacturing methods form desired part shapes by adding one layer at a time and therefore provide for the formation of part shapes and geometries that would not be feasible in part constructed utilizing traditional subtractive manufacturing methods.

Additive manufacturing utilizes an energy source such as a laser beam to melt layers of powdered metal to form the desired part configuration layer upon layer. The laser forms a melt pool in the powdered metal that solidifies. Another layer of powdered material is then spread over the formerly solidified part and melted to the previous layer to build a desired part geometry layer upon layer. Powdered material that is applied but not melted to become a portion of the part accumulates around and within the part. For smaller parts the excess powdered material is not significant. However, as capabilities improve and larger parts are fabricated, the excess powdered metal becomes a significant consideration in both part fabrication capabilities and economic feasibility.

### SUMMARY

An additive manufacturing process according to an exemplary embodiment of this disclosure includes defining a work surface, depositing material over a portion of the work surface, directing energy on portions of the deposited material according to a defined part geometry, and moving the work surface relative to the blocker plate to maintain a distance for incremental deposition of material.

An embodiment of the foregoing additive manufacturing process includes blocking material from the work surface with the blocking plate.

A further embodiment of any of the foregoing additive manufacturing processes includes removing excess material from the blocker plate.

A further embodiment of any of the foregoing additive manufacturing processes includes defining an outer perimeter of the part with a sidewall barrier defining an opening through the blocker plate.

A further embodiment of any of the foregoing additive manufacturing processes the sidewall barrier includes a vertical length greater than a thickness of the blocker plate.

A further embodiment of any of the foregoing additive manufacturing processes includes a working surface movable relative to the blocker plate within the contour of the sidewall barrier.

A further embodiment of any of the foregoing additive manufacturing processes includes a material storage container receiving material removed from the blocker plate.

A further embodiment of any of the foregoing additive manufacturing processes includes fixing the blocker plate relative to movement of the material applicator.

An additive manufacturing machine according to an exemplary embodiment of this disclosure includes a work surface for supporting fabrication of a desired part geometry, a housing defining a chamber over the work surface, a material applicator for depositing material onto the work surface, a blocker plate disposed between the material applicator and the work surface for blocking a portion of material deposited by the material applicator, and an energy directing device directing energy within the chamber to form a desired part geometry.

An embodiment of the foregoing additive manufacturing machine includes an actuator for moving the work surface relative to the housing.

A further embodiment of any of the foregoing additive manufacturing machines includes a controller governing movement of the work surface relative to the housing.

In a further embodiment of any of the foregoing additive manufacturing machines, the blocker plate includes an opening corresponding to at least the outer perimeter of the part.

A further embodiment of any of the foregoing additive manufacturing machines includes a sidewall barrier extending through the opening of the blocker.

In a further embodiment of any of the foregoing additive manufacturing machines, the plunger includes a length greater than a thickness of the blocker plate.

In a further embodiment of any of the foregoing additive manufacturing machines, the plunger extends downward into a space between the blocker plate and the work surface.

A further embodiment of any of the foregoing additive manufacturing machines includes a material removal device for removing material deposited on the blocker plate.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example additive manufacturing machine in an initial position.
Figure 2 is a schematic view of the example additive manufacturing machine in an intermediate position.
Figure 3 is a partial schematic view of another example additive manufacturing machine.
Figure 4 is a schematic view of the example additive manufacturing machine in a final position.

### DETAILED DESCRIPTION

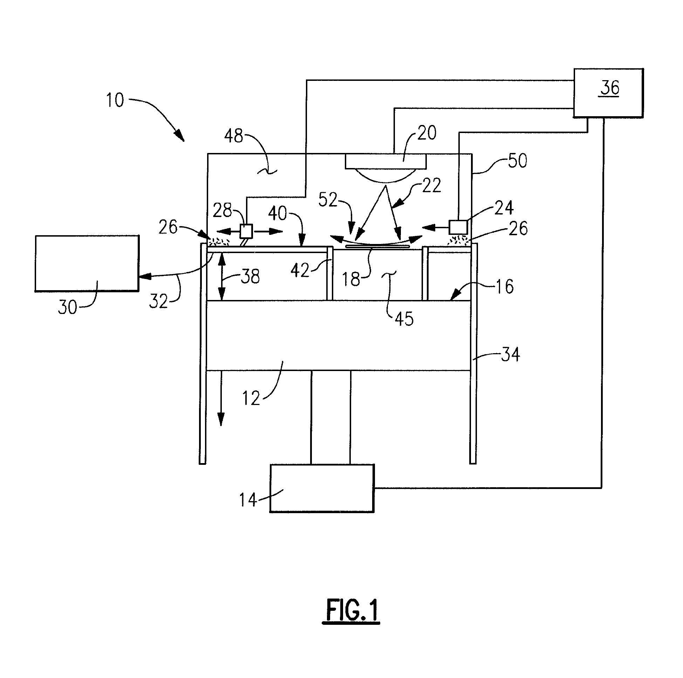

Referring to Figure 1, an example, disclosed additive manufacturing machine 10 includes a platform 12 that defines a work surface 16. The platform 12 is movable by an actuator 14. The platform 12 moves vertically within a chamber 48 defined within a housing 50 to maintain a desired height between a powdered material applicator 24 and the part 18.

In general, the example additive manufacturing machine operates by applying a layer of material 26 with a material applicator 24 over the work surface 16. The energy transmitting device 20 emits an energy beam 22 across the material 26 applied over the plug 45 to selectively melt portions of the applied material 26 to form the desired part 18. Subsequent layers of material 26 are applied over the previously melted and solidified layers to build the part 18 to a desired geometry.

The additive manufacturing process utilizes a metal powder material 26 that is subsequently melted by the energy beam 22 provided by the energy transmitting device 20. In this example, the beam 22 comprises a laser beam and the energy transmitting device 20 a laser. During fabrication of the part 18, excess material 26 is typically left within the chamber 48 and is not melted. For small parts, the accumulation of excess material around the part 18 is insignificant and does not add significant mass. However, as larger parts 18 are being fabricated in increasingly larger chambers 48, the amount of excess material build up becomes significant.

The platform 12 is movable by the actuator 14 to move the work surface 16 relative to the material applicator 24. The movement of the platform 12 relative to the material applicator 24 is required to maintain a desired distance between the material applicator 24 and the surface of the part 18. The distance provides the height for application of additional material above the plug 45 and the part 18.

Significant amounts of additional material 26 add to the load that is borne by the platform 12 and the actuator 14. The actuator 14 moves the platform 12 incrementally relative to the material applicator 24. The material layer applied over the plug 45 is rather small in thickness and therefore the movements required by the actuator 14 are small and precisely executed. The increase of material and thereby the load on the platform 12 without the blocker plate 40 places a much higher requirement on the actuator 14 requiring substantially larger actuators that increase cost and complicate control.

The example additive manufacturing machine 10 includes a blocker plate 40 with a sidewall barrier 42 that is disposed within the chamber 48. The blocker plate 40 in this example is secured to walls 34 of the chamber 48. The blocker plate 40 holds the excess material 26 away from the work surface 16. The sidewall barrier 42 allows material to fall onto through opening 52 over a working surface of the plug 45 and part 18 but blocks excess material 26 from falling onto the work surface 16. A plug 45 mounted on the work surface 16 and conformal to sidewall barrier 42 works in concert with the sidewall barrier 42 to prevent excess material from falling onto the working surface 16.

In this example, as material 26 is deposited upon the blocking plate 40 and over the plug 45 and part 18, the sweeping device 28 directs excess material through a passage 32 to a powder supply or exhaust system schematically indicated at 30. Material 26 applied over the blocker plate 40 falls through the opening in the blocker plate 40 left by the sidewall barrier 42 onto the working surface of the plug 45 and the part 18. The energy beam or laser beam 22 then follows to melt the material on the working surface of the part 18. The remaining excess material 26 on the blocking surface 40 does not disturb the part 18 and is swept away prior to the application of another layer of material 26.

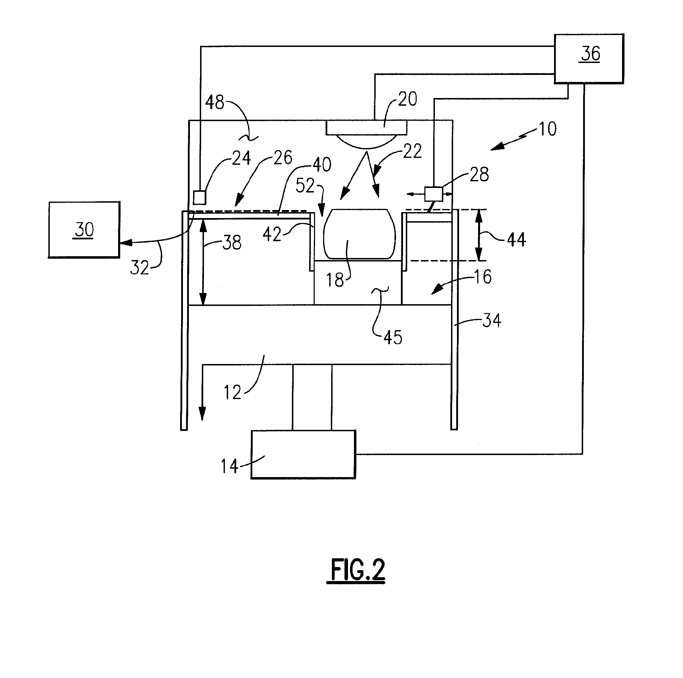

Referring to Figure 2, the example additive manufacturing machine 10 is show in an intermediate position where the part 18 has grown such that a height 38 between the work surface 16 and the blocker plate 40 has increased from the previous position illustrated in Figure 1. The height of the part 18 has also increased a distance 44. In traditional additive manufacturing processes the increased height 44 of the part 18 would correspond to an increase in excess material 26 across the entire work surface 16 not just across the plug 45 and the part 18 as is shown in Figure 2. Excess material would fill the work space and exert an additional load on the platform 12 and thereby the actuator 14.

The example additive manufacturing machine 10 removes the excess material with the sweeping device 28 to eliminate accumulation of excess material 26. Although the sweeping device 28 is illustrated as physically moving the excess material, other means may be utilized for removing excess material and are within the contemplation of this invention. For example, a vacuum device may be utilized to draw excess material from the chamber 48.

The blocker plate 40 includes the sidewall barrier 42 that extends downward through an opening 52 defined in the blocker plate 40 that corresponds with a desired part geometry 18. The opening 52 in the blocker plate 40 and the sidewall barrier 42 may be a simple shape such as a square or a circle or may be a more complex shape suitable to the part being produced.

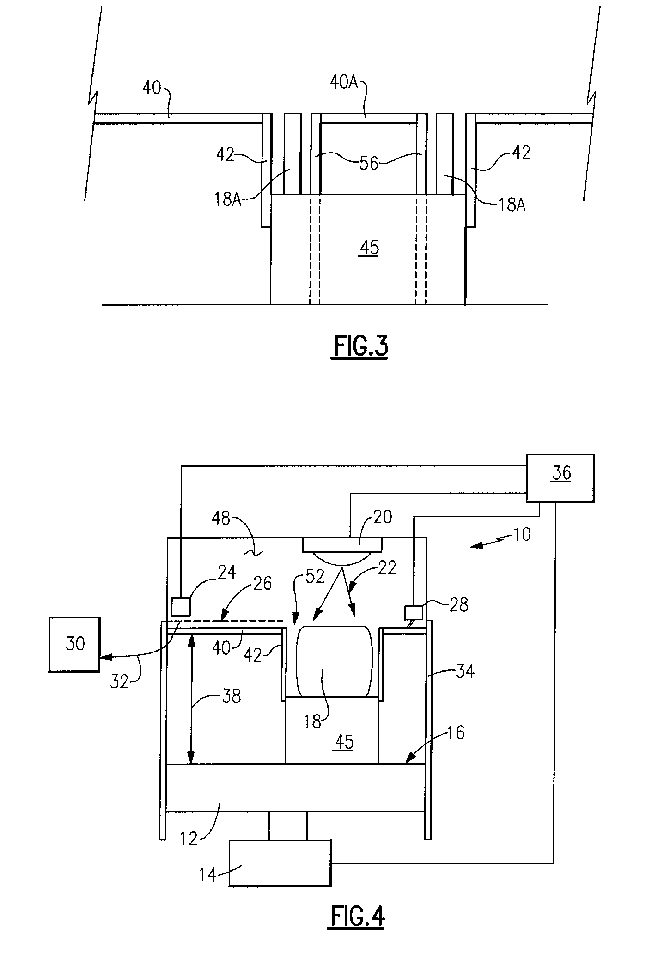

Referring to Figure 3, the sidewall barrier 42 may also be a complex or a multi-part configuration with both an inner sidewall 56 and the outer sidewall barrier 42. A part 18A is formed between the inner sidewall 56 and the outer sidewall barrier 42. The example inner sidewalls 56 extend upward through the plug 45 and support a portion of the blocker plate 40A. The blocker plate 40A is cleared off with the blocker plate 40. The space between the inner sidewall 56 and the sidewall barrier 42 defines the space for portions of the part 18A.

Referring to Figure 2, the plug 45 and opening 52 accommodate an outer periphery of the part 18. Openings and other features within the part 18 may accumulate excess non-melted material. However, such accumulation is minimal as compared to the amount of material that would accumulate across the entire work surface 16. Moreover, the sidewall barrier 42 includes a height 44 that in concert with plug 45 provides a working height sufficient to produce part 18 and maintain a seal between plug 45 and sidewall barrier 42 to prevent powdered material 26 from accumulating on working surface 16. The platform 12 moves progressively downward in response to commands by a controller 36 that governs operation of the actuator 14. The controller 36 commands the actuator 14 to move the platform 12 downward incrementally to maintain a desired distance between the material applicator 24 and the working surface of the part 18. Maintaining the distance between the material applicator 24 and the working surface of the part 18 maintains a desired height to maintain the desired layer thickness of material 26.

Referring to Figure 4, the example additive manufacturing machine 10 is shown in a position where the part 18 is substantially in a complete position and the platform 12 is in a substantially lowered or final position. The part 18 has increased in height and the platform 12 has moved away from the blocker plate 40 to increase the distance 38 between the work surface 16 and the blocker plate 40. After each pass of the material application device 24, the sweeper 28 moves over the blocker plate 40 to remove the excess material 26. Accordingly, the only material that remains is that that is deposited through opening 52 above the working surface of the plug 45 and the part 18. Other excess material is swept away from the blocker plate 40 and thereby it does not contribute to the load borne by the platform 12 and the actuator 14.

Referring to Figures 1, 2, and 4, in operation, the example additive manufacturing machine 10 begins with the platform 12 in an initial position with a blocker plate 40 spaced apart from the work surface 16. The material applicator 24 applies powdered metal material 26 over the blocker plate 40 and through the opening 52.

The material application device 24 moves across the blocker plate 40 such that some material will fall through the opening 52 onto the plug 45. The laser beam 22 sweeps across the material deposited through on the plug 45 to melt and resolidify the powdered metal material 26 deposited onto the plug 45.

Once the material has been solidified to the work piece 18, Subsequent passes by the material deposition device 24 apply additional material 26 that will fall through the opening 52 defined by the sidewall barrier 42 and onto the plug 45 and the part 18.

The controller 36 directs incremental movement of the platform 12 downward to space the work surface 16 away from the blocker plate 40. The working surface of the part 18 incrementally maintains a set distance from the material applicator 24 throughout the fabrication process as provided by movement of the platform 12.

Referring to Figure 2, the controller 36 directs the actuator 14 to move the platform 12 as is required to maintain the desired distance between the material applicator 24 and the working surface of the part 18. As the part 18 grows vertically, the platform 12 is moved vertically downward away from the blocker plate 40 to the distance 38. The distance 38 between the blocker plate 40 and plug 45 will increase as the part 18 grows in height.

Referring to Figure 4, the distance 38 between the work surface 16 and the blocker plate 40 is at its greatest location. The excess material is removed from above blocker plate 40 after each application or several applications as is most efficient during operation.

Accordingly, the example disclosed additive manufacturing machine 10 and process eliminates the excessive loads exerted on the work surface 16 that must be accommodated by the actuator 14 by blocking material from being deposited on portions of the work surface 16 that do not correspond with the part 18 and plug 45. Although an example embodiment has been disclosed, a worker of ordinary skill in this art would recognize that certain modifications would come within the scope of this disclosure. For that reason, the following claims should be studied to determine the scope and content of this disclosure.

## Claims

1. An additive manufacturing process comprising:
defining a work surface (16);
depositing material (26) over a portion of the work surface (16);
directing energy (22) on portions of the deposited material (26) according to a defined part geometry; and
moving the work surface (16) relative to a blocker plate (40) to maintain a distance for incremental deposition of material .

2. The additive manufacturing process as recited in claim 1, including blocking material from the work surface (16) with the blocking plate (40).

3. The additive manufacturing process as recited in claim 1 or 2, including removing excess material (26) from the blocker plate (40).

4. The additive manufacturing process as recited in any of claims 1 to 3, including defining an outer perimeter of the part (18) with a sidewall barrier (42) defining an opening (52) through the blocker plate (40).

5. The additive manufacturing process as recited in claim 4, wherein the sidewall barrier (42) includes a vertical length greater than a thickness of the blocker plate (40).

6. The additive manufacturing process as recited in claim 4 or 5, including a working surface (16) movable relative to the blocker plate (40) within the contour of the sidewall barrier (42).

7. The additive manufacturing process as recited in any of claims 1 to 6, including a material storage container (30) receiving material removed from the blocker plate (40).

8. The additive manufacturing process as recited in any of claims 1 to 7, including fixing the blocker plate (40) relative to movement of a material applicator (24).

9. An additive manufacturing machine (10) comprising:
a work surface (16) for supporting fabrication of a desired part geometry;
a housing (50) defining a chamber (48) over the work surface (18);
a material applicator (24) for depositing material (26) onto the work surface (16);
a blocker plate (40) disposed between the material applicator (24) and the work surface (16) for blocking a portion of material deposited by the material applicator (24); and
an energy directing device (20) directing energy (22) within the chamber (48) to form a desired part geometry.

10. The additive manufacturing machine (10) as recited in claim 9, including an actuator (14) for moving the work surface (16) relative to the housing (50).

11. The additive manufacturing machine (10) as recited in claim 9 or 10, including a controller (36) governing movement of the work surface (16) relative to the housing (50).

12. The additive manufacturing machine (10) as recited in any of claims 9 to 11, wherein the blocker plate (40) includes an opening (52) corresponding to at least the outer perimeter of the part (18).

13. The additive manufacturing machine (10) as recited in claim 12, including a sidewall barrier (42) extending through the opening (52) of the blocker (40).

14. The additive manufacturing machine (10) as recited in any of claims 9 to 13, wherein a plunger (45) includes a length greater than a thickness of the blocker plate (40), wherein, optionally, the plunger (45) extends downward into a space between the blocker plate (40) and the work surface (16).

15. The additive manufacturing machine (10) as recited in any of claims 9 to 14, including a material removal device (28) for removing material (26) deposited on the blocker plate (40).
